(19) Europäisches Patentamt
European Patent Office
Office européen des brevets

(11) EP 4 439 844 A1

(12) EUROPEAN PATENT APPLICATION

(43) Date of publication:
02.10.2024 Bulletin 2024/40

(51) International Patent Classification (IPC):
H01M 50/446 (2021.01)    H01M 50/451 (2021.01)
H01M 50/46 (2021.01)

(21) Application number: 24164560.5

(22) Date of filing: 19.03.2024

(52) Cooperative Patent Classification (CPC):
H01M 50/461; H01M 50/446; H01M 50/451

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.03.2023 KR 20230035933

(71) Applicants:
• SK Innovation Co., Ltd.
Seoul 03188 (KR)

• SK ie technology Co., Ltd.
Jongno-gu
Seoul
03188 (KR)

(72) Inventors:
• CHO, Kyu Young
34124 Daejeon (KR)
• KIM, Yun Bong
34124 Daejeon (KR)
• OH, Eun Ji
34124 Daejeon (KR)

(74) Representative: Prüfer & Partner mbB
Patentanwälte · Rechtsanwälte
Sohnckestraße 12
81479 München (DE)

(54) **SEPARATOR AND ELECTROCHEMICAL DEVICE INCLUDING THE SEPARATOR**

(57)    Provided is a separator and an electrochemical device including the separator. According to an exemplary embodiment, a separator including: a porous substrate; and a heat-resistant adhesive layer disposed on at least one surface of the porous substrate, wherein the heat-resistant adhesive layer includes inorganic particles; and organic particles having a plurality of protrusion parts and a plurality of valley parts, may be provided.

FIG. 1

EP 4 439 844 A1

## Description

## TECHNICAL FIELD

The following disclosure relates to a separator and an electrochemical device including the separator. Specifically, the following disclosure relates to a separator having excellent electrode adhesion, anti-blocking properties, and air permeability, and an electrochemical device including the separator.

## BACKGROUND

To ensure high temperature stability of a separator, a ceramic coated separator (CCS) having a porous inorganic particle layer formed on one or both surfaces of a porous substrate is used. The ceramic coated separator has excellent heat resistance due to its low heat shrinkage rate at a high temperature, and thus it is applied to a large battery system for electric vehicles (EVs).

However, since a conventional ceramic coated separator has insufficient adhesion to an electrode, the separator and the electrode are separated during a cell assembly process to often cause distortion, deformation, and the like of an electrode assembly. That is, when adhesion between the ceramic coated layer of the separator and the electrode is insufficient as described above, a misalignment problem may occur between the electrode and the separator within a jelly roll during cell stacking. When a stack cell battery having misalignment as described above is operated, a short circuit between electrodes occurs due to occurrence of local resistance by the misalignment or physical damage from continued use, which raises a safety problem such as fire.

Therefore, improvement of adhesion between a ceramic coated separator and an electrode is a problem to be solved in order to improve battery stability.

As one method of improving adhesion between the separator and the electrode, there is a method of forming an adhesive organic layer on an inorganic particle layer of the ceramic coated separator, but air permeability becomes poor by the organic layer, thinning is difficult, adhesion to an electrode is still poor, and a blocking phenomenon in which an adhesive organic layer is released during separator winding occurs. Therefore, there are problems to be solved, such as a decreased ion conductivity of a separator and/or occurrence of thickness deviation during alignment of an electrode assembly to deteriorate battery performance.

[Related Art Documents]

[Patent Documents]

(Patent Document 1) Japanese Patent Registration Publication No. 4414165 (publication date: March 3, 2005)

## SUMMARY

An embodiment of the present disclosure is directed to providing a separator having excellent electrode adhesion, anti-blocking properties, and air permeability in particular at a small thickness, and is directed to an electrochemical device including the separator.

In one general aspect, a separator includes: a porous substrate; and a heat-resistant adhesive layer disposed on at least one surface of the porous substrate, wherein the heat-resistant adhesive layer includes inorganic particles; and a binder component including organic particles having a plurality of protrusion parts and a plurality of valley parts. In one example, an average particle diameter (D50) of the organic particles is 0.1 to 1.5 um, where D50 is a particle diameter below which 50% of the total particles are found.

In one example, the inorganic particles and the organic particles are spatially mixed and dispersed. For example the organic particles that are dispersed and mixed with inorganic particles and include a plurality of protrusion parts and a plurality of valley parts. And the inorganic particles and the organic particles are holds and binds to the at least one surface of the porous substrate.

In an exemplary embodiment, the heat-resistant adhesive layer may include 50 wt% or more of the organic particles based on the total weight of the binder component.

In an exemplary embodiment, the heat-resistant adhesive layer may further include an organic binder as the binder component.

In an exemplary embodiment, the organic binder may include any one or two or more selected from the group consisting of acryl-based polymers, silane-based compounds, styrene butadiene rubber, carboxymethylcellulose, polyvinylidene fluoride, polyvinylpyrrolidone, polyvinyl acetate, and the like.

In an exemplary embodiment, the heat-resistant adhesive layer may include 30 to 85 wt% of the inorganic particles, 10 to 60 wt% of the organic particles, and 1 to 15 wt% of the organic binder, based on the total weight of the heat-resistant adhesive layer.

In an exemplary embodiment, a ratio of an average particle diameter (D50) of the organic particles to an average particle diameter (D50) of the inorganic particles may be 0.5 to2.5, preferably 0.5 to 1.5.

In an exemplary embodiment, a particle size distribution of the organic particles, D10/D90, may be 0.3 to 0.9.

In an exemplary embodiment, the organic particles may have a glass transition temperature (Tg) of 50 to 90°C.

In an exemplary embodiment, the heat-resistant adhesive layer may have a thickness of more than 0 um and 5 um or less, preferably more than 0 um and 2 um or less.

In an exemplary embodiment, the separator may have a total thickness of more than 0 um and 20 um or less, preferably more than 0 um and 15 um or less.

In an exemplary embodiment, the organic particles may be at least one of: secondary particles in which primary particles are aggregated with each other by surface melting to form a plurality of protrusion parts and a plurality of valley parts; and/or primary particles respectively having a plurality of protrusion parts and a plurality of valley parts on a surface of the primary particles

In an exemplary embodiment, the separator may have an electrode adhesive strength of 1.5 gf/15 mm to 4.0 gf/15 mm, the electrode adhesive strength being measured by laminating the separator on a carbon sheet (TOYO Tanso Korea, PF-20HP) having a thickness of 200 um so that the heat-resistant adhesive layer of the separator faces the carbon sheet, adhering the separator by compression at 20 MPa at 80°C for 30 seconds with a heat press, and peeling off the separator at 180° using universal testing machine (UTM) equipment available from INSTRON in accordance with ASTM D903.

In an exemplary embodiment, the separator may have an amount of change in air permeability $\Delta G$ of 100 sec/100 cc or less as measured by the following equation:

$$\triangle G = G_1 - G_2$$

wherein $G_1$ is a Gurley permeability of a separator in which a heat-resistant adhesive layer is laminated on both surfaces of a porous substrate, and $G_2$ is a Gurley permeability of the porous substrate itself. The Gurley permeability is measured using a densometer available from Toyoseiki in accordance with the standard of ASTM D726, and its unit is sec/100 cc.

In an exemplary embodiment, when two sheets of separators are disposed so that the adhesive layers face each other, compressed at a pressure of 7.5 MPa at a temperature of 60°C for 1 hour, and peeled off at 180° in accordance with ASTM D903, the adhesive layers are separated as they are since the adhesive layers are adhered to each other and do not partially or completely peeled off, resulting in no blocking occurrence.

In still another general aspect, an electrochemical device includes the separator according to the exemplary embodiment described above.

In an exemplary embodiment, the electrochemical device is a lithium secondary battery comprising said separator between a positive electrode and a negative electrode.

In an example embodiment, an electrochemical device comprising a separator comprising:

a porous substrate; and
a heat-resistant adhesive layer disposed on at least one surface of the porous substrate,
wherein the heat-resistant adhesive layer includes:

inorganic particles;
organic particles that are dispersed and mixed with inorganic particles and include a plurality of protrusion parts and a plurality of valley parts, wherein an average particle diameter (D50) of the organic particles is 0.1 to 1.5 um, where D50 is a particle diameter below which 50% of the total particles are found; and
a binder material that holds and binds the inorganic particles and the organic particles to the at least one surface of the porous substrate.

In an example embodiment, wherein the heat-resistant adhesive layer includes 50 wt% or more of the organic particles based on the total weight of the binder component.

In an example embodiment, wherein a ratio of an average particle diameter (D50) of the organic particles to an average particle diameter (D50) of the inorganic particles is 0.5 to 1.5.

In an example embodiment, wherein a particle size distribution of the organic particles (D10/D90) is 0.3 to 0.9, where D10 is a particle diameter below which 10% of the total organic particles are found, and D90 is a particle diameter below which 90% of the total organic particles are found.

In an example embodiment, wherein the organic particles have a glass transition temperature (Tg) of 50 to 90°C.

In an example embodiment, wherein the heat-resistant adhesive layer has a thickness ranging from 0 um to 5 $\mu$m.

In an example embodiment, wherein the organic particles are at least one of: secondary particles in which primary particles are aggregated with each other by surface melting to form a plurality of protrusion parts and a plurality of valley parts; or primary particles having a plurality of protrusion parts and a plurality of valley parts on a surface of the primary particles.

Other features and aspects will be apparent from the following detailed description, the drawings, and the claims.

## BRIEF DESCRIPTION OF THE DRAWINGS

FIG. 1 is a photograph of a shape of organic particles according to an exemplary embodiment of the present invention observed by SEM.

FIG. 2 illustrates a shape of the organic particle according to an exemplary embodiment of the present invention.

FIG. 3 is a photograph of a heat-resistant adhesive layer of a separator of Example 1 observed by SEM.

FIG. 4 is a photograph of a heat-resistant adhesive layer of a separator of Comparative Example 1 observed by SEM.

FIG. 5 is a photograph of a heat-resistant adhesive layer of a separator of Comparative Example 2 observed by SEM.

FIG. 6 is a photograph of a heat-resistant adhesive layer of a separator of Comparative Example 3 observed by SEM.

## DETAILED DESCRIPTION OF EMBODIMENTS

Hereinafter, the present disclosure will be described in more detail by the following exemplary embodiment or examples. However, the following exemplary embodiments or examples are only a reference for describing the present disclosure in detail, and the present disclosure is not limited thereto and may be implemented in various forms.

In addition, unless otherwise defined, all technical terms and scientific terms have the same meanings as those commonly understood by one of those skilled in the art to which the present disclosure pertains. The terms used herein are only for effectively describing a certain specific example, and are not intended to limit the present disclosure.

In addition, the singular form used in the specification and claims appended thereto may be intended to include a plural form also, unless otherwise indicated in the context.

In addition, unless explicitly described to the contrary, "comprising" any components will be understood to imply the inclusion of other elements rather than the exclusion of any other elements.

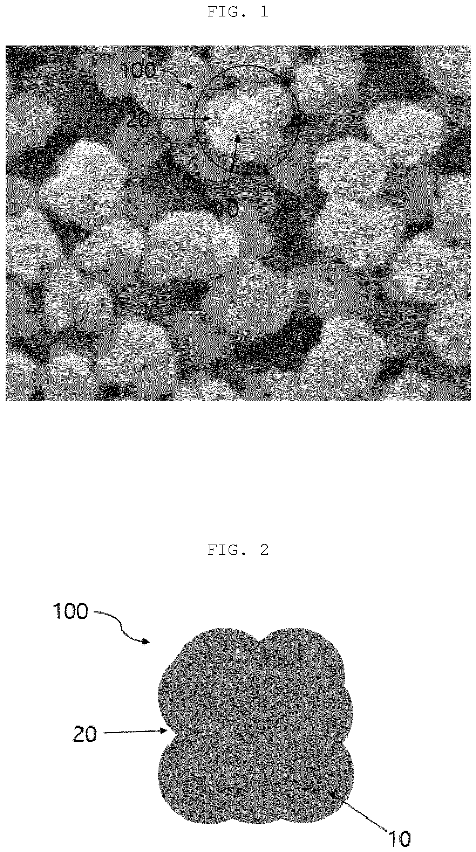

In the present disclosure, an organic particle 100 may be a polymer particle, and as shown in FIGS. 1 and 2, may include a plurality of protrusion parts 10 and a plurality of valley parts 20 formed thereon. As an example, the organic particle may be an aggregate or agglomerate in which a plurality of polymerized primary particles are aggregated or agglomerated with each other by surface melting, that is, a secondary particle. The plurality of protrusion parts 10 and the plurality of valley parts 20 may be formed by aggregating or agglomerating the primary particles. In some implementations, a binder particle in a secondary particle form may refer to a particle form including a plurality of protrusion parts corresponding to a part of the primary particles and a valley or a shrunk cavity is formed between the protrusion parts. For example, the binder particle may include a plurality of convex protrusion parts (bump part) in a primary particle form, e.g., 3 or more, 4 or more, 5 or more, 6 or more, or 8 or more convex protrusion parts, and a plurality of valley parts or depression parts formed between the protrusion parts.

As an example, the organic particle may be a primary particle having a plurality of protrusion parts and a plurality of valley parts. Otherwise, the organic particle may be a mixture of secondary particle and primary particles.

The protrusion parts and the valley parts of the organic particle may have irregular sizes and shapes. The term "irregular" refers to substantially not straight, substantially non-uniform or uneven, or substantially asymmetrical. The term "protrusion part" refers to a protruded part on the surface of the particle, and is shown as 10 in FIGS. 1 and 2. The "valley or depression part" refers to a concavity or depression on the surface of the particle, refers to a concavity formed by a height difference from the center of the organic particle between the plurality of protrusion parts (see 20 in FIGS. 1 and 2).

In some embodiments of the disclosed technology, "Dn" (n is a real number) refers to a diameter of a particle corresponding to n% as a volume-based integrated fraction: "Dn" represents a particle diameter where particles with a diameter less than Dn are n% of the total particles. For example, "D50" refers to a particle diameter below which 50% of the total particles can be found. For example, "D90" refers to a particle diameter below which 90% of the total particles can be found. For example, "D10" refers to a particle diameter below which 10% of the total particles can be found. The Dn may be derived from the results of a particle size distribution obtained by collecting a sample of particles to be measured in accordance with the standard of ISO 13320-1 and performing analysis using a particle size analyzer (e.g., S3500, Microtrac).As an embodiment, the separator of the present disclosure includes a porous substrate; and a heat-resistant adhesive layer disposed on at least one surface of the porous substrate, wherein the heat-resistant adhesive layer includes inorganic particles and organic particles including a plurality of protrusion parts and a plurality of valley parts. In one example, an average particle diameter D50 of the organic particles is 0.1 to 1.5 um.

Hereinafter, each constituent of the separator will be described in detail.

In an exemplary embodiment, the porous substrate may be a polyolefin-based porous substrate such as polyethylene and polypropylene, but is not particularly limited thereto, and all porous substrates for an electrochemical device may be used. In an exemplary embodiment, the porous substrate may be manufactured into a film or sheet, but is not particularly limited thereto. As an example, the porous substrate includes polyolefin such as polyethylene and polypropylene and may use a multilayer of two or more layers.

In an exemplary embodiment, the porous substrate may have a thickness of, for example, 1 pm or more, 2 pm or more, 3 um or more, 4 um or more, 5 um or more, or 6 um or more. The upper limit is not limited, but for example, may be 100 um or less, 50 um or less, 30 um or less, 20 um or less, 15 um or less, 12 um or less, or a value between the numerical values, and unlimitedly, may be 1 to 100 um, or 3 to 50 $\mu$m, 5 to 20 um, or 5 to 15 um for implementing a high capacity battery.

In an example embodiment, the heat-resistant adhesive layer may be a porous layer in which the inorganic particles are connected and anchored by the binder component to form pores between the inorganic particles, and the organic particles are connected and fixed to the inorganic particles or the binder component to form pores. In an example embodiment, the heat-resistant adhesive layer is disposed on one or both surfaces of the porous substrate at an area fraction of 60% or more, 70% or more, 80% or more, or 90% or more based on the entire surface of the porous substrate. In one example, the inorganic particle layer is disposed on one or both surfaces of the porous substrate at an area fraction of 100% except in cases where there are some defects.

As an exemplary embodiment, the inorganic particles are added to improve heat resistance of the separator and the type is not particularly limited to a specific type of inorganic particle. In a non-limiting example, the inorganic particles may include one or two or more of metal hydroxides, metal oxides, metal nitrides, and metal carbides. As an example, the inorganic particles may include any one or two or more selected from the group consisting of $SiO_2$, SiC, MgO, $Y_2O_3$, $Al_2O_3$, $CeO_2$, CaO, ZnO, $SrTiO_3$, $ZrO_2$, $TiO_2$, AlO(OH), or others, but is not limited thereto. In order to improve the stability of a battery, the inorganic particles are preferably metal hydroxide particles such as boehmite, pseudo-boehmite, aluminum hydroxide, and magnesium hydroxide, but is not limited thereto.

As an exemplary embodiment, when boehmite is used as the inorganic particles, boehmite may have a specific surface area (BET) of 10 $m^2$/g or more or 15 $m^2$/g or more, but is not particularly limited thereto.

In an exemplary embodiment, the D50 of the inorganic particles may be more than 0 um, 0.05 um or more, 0.1 um or more and 5 um or less, 3 um or less, 2 um or less, 1 um or less, 0.5 pm or less, or a value between the numerical values. For example, the D50 may be more than 0 um and 5 um or less, more than 0 um and 3 um or less, 0.05 um or more and 2 um or less, 0.1 um or more and 1 um or less, or 0.1 um or more and 0.5 um or less.

A method of preparing the inorganic particles satisfying the D50 numerical value range of the exemplary embodiment is not particularly limited, but based on a non-limiting example, the particles may be prepared as single inorganic particles satisfying the D50 numerical value range, or may be prepared as mixed inorganic particles satisfying the D50 numerical value range by mixing inorganic particles having different D50 from each other.

The heat-resistant adhesive layer based on an exemplary embodiment includes the organic particles having a plurality of protrusion parts and a plurality of valley parts, and by including the organic particles having the average particle diameter of 0.1 to 1.5 um, adhesion with an electrode is excellent even as a thin film, specifically, even at a thickness of 50 um or less, an increase in transmittance is little even after forming the heat-resistant adhesive layer as compared with the transmittance of the porous substrate itself, and no blocking occurs to solve problems occurring during electrode assembly. In addition, a separator having better adhesion to an electrode as compared with the case of using general spherical organic particles may be provided.

Next, among the binder components in the heat-resistant adhesive layer of the present exemplary embodiment, organic particles which contribute the most to electrode adhesive strength will be described in detail.

In the present disclosure, the organic particle may be a secondary particle in the form in which primary particles are aggregated by melting on the surface, and/or a single particle having a plurality of convexly protruded protrusion parts and a plurality of depression parts or a plurality of valleys between the protrusion parts.

The organic particle is not particularly limited, but may be an "organic particle in a secondary particle form" having a D50 particle diameter of 0.1 to 1.5 $\mu$m, 0.2 to 1.5 um, or 0.3 to 1 um. A typical form of the binder particle in a secondary particle form may be a particle form in which a plurality of polymerized primary particles are melted with each other, for example, melted on the surface and aggregated, so that the surface of the aggregate is protruded and depressed by the primary particles, as shown in FIG. 1. As another example, the binder particle may be in form of a particle in which, though there is no aggregation, a plurality of valleys or a plurality of shrunk cavity parts are formed among three or more convex protrusion parts in one particle. For yet another example, the binder particle may be in form of a particle in which 3 or more, 4 or more, 5 or more, or 6 or more convex protrusion parts are formed on the surface of the organic particle and a plurality of valleys or a plurality of shrunk cavity parts are formed between the protrusion parts.

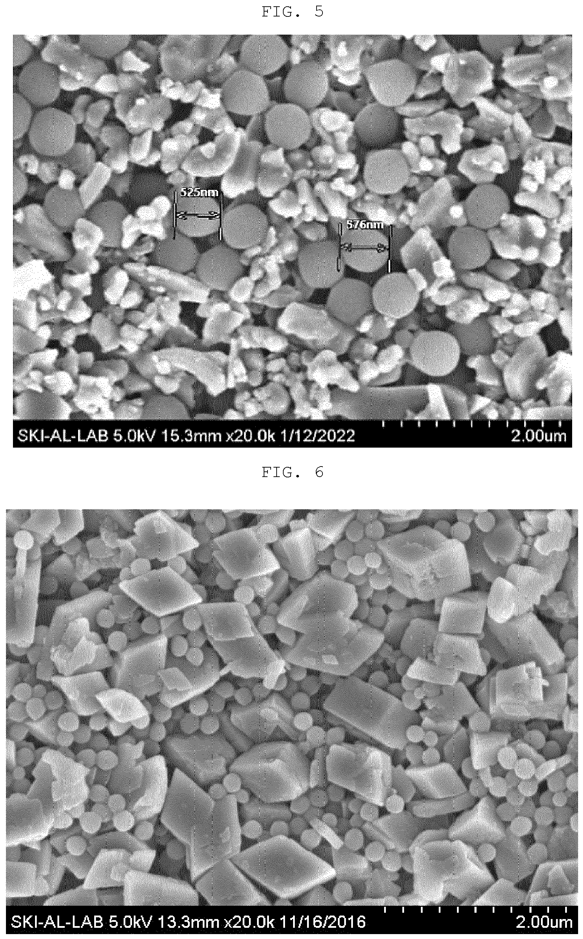

The organic particles of the present invention having the size and shape may significantly improve adhesion to an electrode, air permeability, and anti-blocking properties even in a smaller amount than the organic particle having a spherical shape as in FIG. 5.

In addition, the average particle diameter (D50) of the organic particles is not particularly limited as long as the particles have the above shape, but for example, may be 1.5 um or less, 1 um or less, 0.5 um or less and 0.1 um or more, 0.3 um or more, or 0.5 um or more, preferably 0.1 to 1.5 um or 0.2 to 1.0 $\mu$m.

In the range of the average particle diameter, a binding effect with the inorganic particles may be achieved better and adhesive strength with an electrode is significantly improved. In particular, when the organic particles have a size of 0.1 to 1.5 um, a blocking phenomenon in which the adhesive layers block each other during a transfer or lamination process or an adhesive is adhered on other areas in contact with the adhesive layer to release the adhesive layer on the inorganic particle layer is significantly decreased, adhesive strength with an electrode is dramatically increased, and also thinning is possible, which is more preferred.

In an exemplary embodiment, as article size distribution of the organic particles, a D10/D90 value may be 0.3 or more, 0.4 or more and 0.9 or less, 0.8 or less, or a value between the numerical values. Otherwise, the D10/D90 value may be 0.3 to 0.9 or 0.4 to 0.8. When the particle size distribution of the organic particles is satisfied, the content of the organic particles for securing electrode adhesive strength may be further decreased, which is thus more advantageous for securing air permeability and anti-blocking properties and preferred, but the present disclosure is not necessarily limited thereto.

In an exemplary embodiment, when a ratio of the average particle diameter of the organic particles to the average particle diameter (D50) of the inorganic particles may be 0.5 or more, 0.6 or more, 0.7 or more and 2.5 or less, 1.5 or less, 1.3 or less, 1.0 or less, or a value between the numerical values, the content of the organic particles introduced to surface irregularities or pores of the inorganic particle layer may be further decreased, which is thus more preferred for securing air permeability and anti-blocking properties, but the present disclosure is not limited thereto. Preferably, the average diameter of the organic particles/ the average diameter of the inorganic particles may be 0.5 to 2.5, 0.5 to 1.5, 0.6 to 1.3, or 0.7 to 1.0.

In an exemplary embodiment, in order for the heat-resistant adhesive layer to provide a separator having excellent electrode adhesion, anti-blocking properties, and air permeability even at a small thickness, the heat-resistant adhesive layer may include 50 wt% or more, 60 wt% or more, 70 wt% or more, 80 wt% or more, 90 wt% or more, 95 wt% or more, 99 wt% or more, or 100% of the organic particles having the specified shape, based on the total weight of the binder component. As the organic particles in the secondary particle form are more contained, it is advantageous to achieve the object of the present disclosure, and thus, the upper limit of the content is not particularly limited.

The organic particles have a specific form defined above, as shown in FIG. 1, whereby the separator may have excellent physical properties such as relatively significant electrode adhesion, air permeability, and anti-blocking properties, as compared with the separator using organic particles which are the same polymer as the organic particles but have a spherical or circular shape without valleys as shown in FIG. 5. Therefore, the composition of the organic particles of the present invention is not particularly limited, and any composition of organic particles which is commonly used for improving electrode adhesion in the art may be applied.

As a non-limiting example, the organic particles may be prepared from a crosslinked or non-crosslinked particulate acryl-based polymer or fluorinated polymer, or may have a core-shell structure. The particulate acryl-based polymer having a core-shell structure may be obtained by including and polymerizing an acryl-based monomer and other comonomers and a crosslinking agent as required on the surface of crosslinked particles or a core rubber, but is not particularly limited.

The organic particles in the specific form according to the exemplary embodiment may significantly improve electrode adhesive strength with a small amount by the structural characteristic, and when they have a glass transition temperature specified below, anti-blocking properties may be further improved, which is thus preferred. In this case, the glass transition temperature (Tg) of the organic particles may be 50°C or higher, 60°C or higher and 90°C or lower, 80°C or lower, 70°C or lower, or a value between the numerical values, and for example, may be 50 to 90°C, 55 to 75°C, or 60 to 70°C, but is not limited thereto.

In an exemplary embodiment, the heat-resistant adhesive layer may optionally further include other components known to be added to an electrode adhesive organic layer of a separator in the art, such as a lubricant and a surfactant, but is not particularly limited thereto.

In an exemplary embodiment, the heat-resistant adhesive layer may further include an organic binder in addition to the organic particles, as the binder component. The organic binder is not limited as long as it serves to connect and fix the inorganic particles in the heat-resistant adhesive layer. As an example, the organic binder may be a particle form or a non-particle form, and when it is a particle form, it may be in a particle form which is distinguished from the organic particle having a plurality of protrusion parts and a plurality of valley parts. In addition, the organic binder may be a water-based latex. The organic binder holds and binds the inorganic particles and the organic particles to the at least one surface of the porous substrate.

As a non-limiting example, the organic binder may include any one or two or more selected from the group consisting of acryl-based polymers such as polymethylmethacrylate, polybutylacrylate, and polyacrylonitrile; (3-aminopropyl)triethoxysilane, (3-aminopropyl)trimethoxysilane, (3-glycidyloxypropyl)trimethoxysilane, and oligomers thereof, or silane-based compounds prepared therefrom; styrene butadiene rubber; carboxymethylcellulose (CMC); polyvinylidene fluoride (PVdF); polyvinylpyrrolidone (PVP); and polyvinyl acetate (PVAc), but is not limited thereto.

In a specific exemplary embodiment, the heat-resistant adhesive layer may include 30 to 85 wt% of the inorganic particles, 10 to 60 wt% of the organic particles, and 1 to 15 parts by weight of the organic binder, based on the total weight of the heat-resistant adhesive layer, but is not limited thereto.

In a specific exemplary embodiment, the heat-resistant adhesive layer may include the inorganic particles at 30 wt% or more, 35 wt% or more, 40 wt% or more and 85 wt% or less, 80 wt% or less, or a value between the numerical values, specifically at 30 to 85 wt% or 40 to 80 wt%. When the inorganic particles are included in the content range in the exemplary embodiment, the heat resistance of the separator may be further improved, but is not particularly limited thereto.

In an exemplary embodiment, the heat-resistant adhesive layer may include the organic particles at 10 wt% or more, 15 wt% or more, 20 wt% or more and 60 wt% or less, 55 wt% or less, 50 wt% or less, or a value between the numerical values, specifically at 10 to 60 wt%, 15 to 55 wt%, or 20 to 50 wt%, based on the total weight of the heat-resistant adhesive layer. When the organic particles are included in the content range in the exemplary embodiment, electrode adhesion, anti-blocking properties, or air permeability may be further improved, but the present disclosure is not particularly limited thereto.

In an exemplary embodiment, the heat-resistant adhesive layer may include the organic binder at 1 wt% or more, 2 wt% or more, 3 wt% or more and 15 wt% or less, 12 wt% or less, 10 wt% or less, or a value between the numerical values, specifically at 1 to 15 wt%, 2 to 12 wt%, or 3 to 10 wt%, based on the total weight of the heat-resistant adhesive layer. In an exemplary embodiment, when the organic binder is included in the content range, the inorganic particles in the separator may be more firmly connected and fixed, but is not particularly limited thereto.

In an exemplary embodiment, the heat-resistant adhesive layer may optionally further include all binders known in the art in addition to the organic binder and the organic particles having a plurality of protrusion parts and a plurality of valley parts, as the binder component, but is not particularly limited thereto.

In an exemplary embodiment, the heat-resistant adhesive layer may be disposed on one or both surfaces of the porous substrate, and when the heat-resistant adhesive layer is disposed on both surfaces of the porous substrate, the thicknesses of the heat-resistant adhesive layers disposed on one surface and the other surface may be the same or different. In an exemplary embodiment, the heat-resistant adhesive layer disposed on one surface of the porous substrate may have a thickness of more than 0 um, 0.1 um or more, 0.2 um or more, 0.3 um or more, 0.4 um or more, 0.5 um or more and 5 um or less, 4 um or less, 3 um or less, 2.5 um or less, 2 um or less, or a value between the numerical values, and the heat-resistant adhesive layer may have a thickness of more than 0 um and 5 um or less, and specifically, more than 0 um and 3 um or less or more than 0 um and 2.5 $\mu$m or less for implementing a high-capacity battery.

The heat-resistant adhesive layer only needs to be manufactured by a common manufacturing method of disposing on a porous substrate using all methods known in the art, and is not particularly limited thereto. As a non-limiting example, the heat-resistant adhesive layer may be formed on the porous substrate by adding water to a mixture of an organic binder and organic particles and performing stirring to prepare a slurry for a heat-resistant adhesive layer, and applying the slurry on one or both surfaces of the porous substrate by one of slot die coating, roll coating, spin coating, dip coating, bar coating, die coating, slit coating, and inkjet printing or a combination thereof.

The separator according to the exemplary embodiment described above may have excellent electrode adhesion, anti-blocking properties, or air permeability even at a small thickness.

In an exemplary embodiment, the separator may have an electrode adhesive strength of 1.5 gf/15 mm or more, 2.0 gf/15 mm or more, 2.5 gf/15 mm or more, or 3.0 gf/15 mm or more, the electrode adhesive strength being measured by laminating the separator on a carbon sheet having a thickness of 200 um so that the adhesive layer of the separator faces the carbon sheet, adhering the separator by compression at 20 MPa at 80°C for 30 seconds with a heat press, and peeling off the separator at 180° using UTM equipment in accordance with ASTM D903. Otherwise, the electrode adhesive strength may be 1.5 gf/15 mm to 4.0 gf/15 mm or 2.0 to 4.0 gf/15 mm.

According to the exemplary embodiment, the organic particles having the above form while having a high glass transition temperature simultaneously may be thinly applied in a small amount or well distributed even with an insufficient application area, thereby securing sufficient electrode adhesion even when applied on the inorganic particle layer and also improving anti-blocking properties, which is thus preferred.

For example, separators in which a porous substrate and a heat-resistant adhesive layer are sequentially laminated are disposed so that the adhesive layers face each other, and then compression is performed at a pressure of 7.5 MPa at a temperature of 60°C for 1 hour. Next, the adhered part is peeled off, and when it is confirmed by SEM whether the adhesive layer is partially or completely peeled off to cause blocking between separator surfaces, the separator may have excellent blocking prevention performance without causing blocking in which the adhesive layers are partially released from their separators.

The separator of an exemplary embodiment may have an amount of change in air permeability ($\triangle$G) represented by the following equation of 100 sec/100 cc or less, 95 sec/100 cc or less, or 90 sec/100 cc or less:

$$\triangle G = G_1 - G_2$$

wherein $G_1$ is a Gurley permeability (sec/100 cc) of a separator in which an adhesive layer is laminated on both surfaces of a porous substrate, and $G_2$ is a Gurley permeability of the porous substrate itself. The Gurley permeability was measured according to the standard of ASTM D726, using a densometer available from Toyoseiki.

In the separator according to an exemplary embodiment, two or more of electrode adhesion, anti-blocking properties, and air permeability may be excellent, and more preferably, all of electrode adhesion, anti-blocking properties, and air permeability may be excellent.

Another exemplary embodiment provides an electrochemical device including the separator. The electrochemical device may be an energy storage device, and though it is not particularly limited, as a non-limiting example, may be a lithium secondary battery. Since the lithium secondary battery is well known and its configuration is also known, it will not described in detail in the present disclosure.

The lithium secondary battery according to one embodiment may include the separator described above between a positive electrode and a negative electrode. Herein, the positive electrode and the negative electrode may be all used without limitation as long as they are commonly used in the lithium secondary battery.

Hereinafter, the present disclosure will be described in more detail, based on the examples and the comparative examples. However, the following examples and the comparative examples are only an example for describing the present disclosure in more detail, and do not limit the present disclosure in any way.

Hereinafter, a method of measuring the physical properties of the separator is as follows.

1. Electrode adhesive strength

Electrode adhesive strength was measured by laminating the separator on a carbon sheet (TOYO Tanso Korea, PF-20HP) having a thickness of 200 um so that the heat-resistant adhesive layer of the separator faces the carbon sheet, adhering the separator by compression at 20 MPa at 80°C for 30 seconds with a heat press, and peeling off the separator at 180° using UTM equipment available from INSTRON in accordance with ASTM D903. When the adhesive strength of the heat-resistant adhesive resistance was too low and even peeling off using UTM equipment was impossible, it was evaluated as "immeasurable".

2. Amount of change in air permeability

Amount of change in air permeability, $\triangle$ G was calculated as follows:

$$\triangle G = G_1 - G_2$$

wherein $G_1$ is a Gurley permeability (sec/100 cc) of a separator in which a heat-resistant adhesive layer is laminated on both surfaces of a porous substrate, and $G_2$ is a Gurley permeability of the porous substrate itself. The Gurley permeability was measured based on the standard of ASTM D726, using a densometer available from Toyoseiki, and a time it took for 100 cc of air to pass a separator having an area of 1 square inch was recorded in seconds. The unit was sec/100 cc.

3. Anti-blocking properties

Two sheets of separators in which a porous substrate and a heat-resistant adhesive layer were laminated were disposed so that the adhesive layers faced each other, and were compressed at a pressure of 7.5 MPa at a temperature of 60°C for 1 hour. Next, when peeling at 180° was performed in accordance with ASTM D903, it was evaluated whether a phenomenon in which the adhesive layers were adhered to each other and partially or completely peeled off occurred. When the adhesive layers were even partially peeled off, blocking occurred, and when the adhesive layers were separated as they are without a peeling phenomenon, blocking did not occur. It was confirmed by SEM whether blocking occurred.

When blocking occurrence was confirmed by SEM, it was evaluated as "NG", and when no blocking occurrence was confirmed, it was evaluated as "OK".

4. Method of measuring average particle diameter

Average particle diameter (D50), D10, and D90 were measured using S3500 available from Microtrac which is a particle size analyzer, in accordance with the ISO 13320-1 standard.

5. glass transition temperature (Tg)

A melting point were measured by heating from at -50° C. to 300° C. at a heating rate of 20° C./min under a nitrogen atmosphere using DSC equipment available from TA (product name: Q200). Here, the measurement was performed by heating twice (1st, 2nd run, and cooling).

6. Thickness (um)

The thickness was measured using a contact type thickness meter having a measurement precision of 0.1 um. The measurement was performed at a measurement pressure of 0.63 N using TESA μ-Hite Electronic Height Gauge available from TESA.

[Example 1]

1) Preparation of slurry for heat-resistant adhesive layer

35 wt% of an acryl-based latex (acryl-based latex in which methyl methacrylate and butyl methacrylate are polymerized) having an average particle diameter (D50) of 550 nm and a glass transition temperature (Tg) of 65°C as organic particles in the form as shown in FIG. 1, 60 wt% of boehmite particles (Nabaltec, Apyral AOH60) having D50 of 600 nm as inorganic particles, and 5 wt% of an aqueous acryl-based binder (Ashland, PVP K120) as an organic binder were added to water so that a solid content was 40 wt%, and stirring was performed to prepare a uniformly mixed slurry for a heat-resistant adhesive layer. At this time, D10/D90 of the organic particles was 0.57.

2) Manufacture of separator

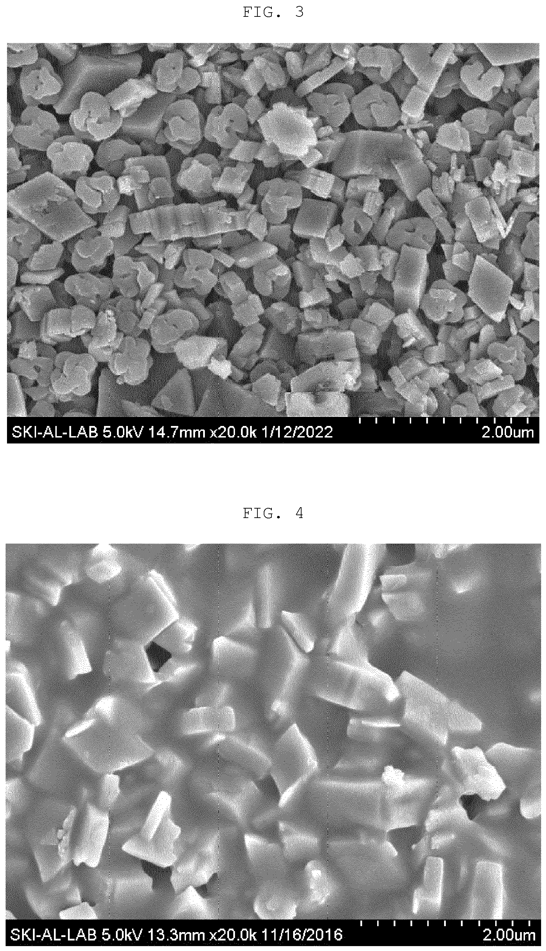

The slurry for a heat-resistant adhesive layer was coated on both surfaces of a polyolefin-based porous substrate (SK Innovation, ENPASS) having a Gurley permeability of 125 sec/100 sec and a thickness of 8.5 um using a slot coating die, passed through a drier maintained at 40°C, and wound in a roll shape. At this time, the thickness of each heat-resistant adhesive layer was 2 um, and the total thickness of the separator was 12.5 um. The photograph of the surface of the adhesive layer is shown in FIG. 3, and the physical properties are listed in Table 1.

[Example 2]

A separator was manufactured in the same manner as in Example 1, except that 40 wt% of organic particles having D50 of 400 nm and a glass transition temperature (Tg) of 65°C, 55 wt% of boehmite particles having D50 of 600 nm as inorganic particles, and 5 wt% of an aqueous acryl-based polymer as an organic binder were used in the preparation of the slurry for a heat-resistant adhesive layer. At this time, D10/D90 of the organic particles was 0.45. The results are listed in Table 1.

[Example 3]

A separator was manufactured in the same manner as in Example 1, except that an acryl-based latex having D50 of 1.5 um and a glass transition temperature (Tg) of 65°C was used at the content listed in Table 1, instead of the organic particles of Example 1, and boehmite particles having D50 of 1000 nm were used at the content listed in Table 1, as the inorganic particles. The results are listed in Table 1.

[Example 4]

A separator was manufactured in the same manner as in Example 1, except that an acryl-based latex having D50 of 1 um and a glass transition temperature (Tg) of 65°C was used at the content listed in Table 1, instead of the organic particles of Example 1, and boehmite particles having D50 of 750 nm were used at the content listed in Table 1, as the inorganic particles. The results are listed in Table 1.

[Example 5]

A slurry for a heat-resistant adhesive layer was prepared in the same manner as in Example 1, except that the aqueous acryl-based binder was not used in the preparation of the slurry for heat-resistant adhesive layer. That is, 40 wt% of the acryl-based latex which is the same as in Example 1, as the organic particles and 60 wt% of boehmite particles having D50 of 600 nm as the inorganic particles were added to water so that the solid content was 40 wt%, and stirring was performed to prepare a uniformly mixed slurry for a heat-resistant adhesive layer.
Other than that, the process was performed in the same manner as in Example 1. The physical properties are shown in Table 1.

[Example 6]

A separator was manufactured in the same manner as in Example 1, except that an acryl-based latex having D50 of 1.5 um and a glass transition temperature (Tg) of 65°C was used at the content listed in Table 1, instead of the organic particles of Example 1, and boehmite particles having D50 of 600 nm were used at the content listed in Table 1, as the inorganic particles. The results are listed in Table 1.

[Comparative Example 1]

The process was performed in the same manner as in Example 1, except that the acryl-based latex was dissolved in an organic solvent and applied in the preparation of the slurry for a heat-resistant adhesive layer. The results are shown in FIG. 4 and Table 1.

[Comparative Example 2]

A separator was manufactured in the same manner as in Example 1, except that an acryl-based latex of FIG. 5 having D50 of 550 nm and a glass transition temperature (Tg) of 65°C, which was prepared by suspension polymerization using the same monomer as in Example 1 as spherical organic binder particles without protrusion parts and valley parts in the organic particles of Example 1 was added at the same content, in the preparation of the slurry for a heat-resistant adhesive layer. The results are shown in FIG. 5 and Table 1.

[Comparative Example 3]

A separator was manufactured in the same manner as in Example 1, except that 45 wt% of an acryl-based latex of having D50 of 200 nm and a glass transition temperature (Tg) of 65°C as spherical organic binder particles without protrusion parts and valley parts in the organic particles of Example 1, 50 wt% of boehmite particles having D50 of 600 nm as inorganic particles, and 5 wt% of an acryl-based polymer as an organic binder were used in the preparation of the slurry for a heat-resistant adhesive layer. The results are shown in FIG. 6 and Table 1.

[Comparative Example 4]

Particles having the shape as shown in FIG. 1 were used as organic particles prepared by suspension polymerization using the same monomer as the organic particles of Example 1, in the preparation of the slurry for a heat-resistant adhesive layer. However, a separator was manufactured in the same manner as in Example 1, except that an acryl-based latex having D50 of 2 um and a glass transition temperature (Tg) of 65°C was coated at the content listed in Table 1. The results are listed in Table 1.

[Comparative Example 5]

Particles having the shape as shown in FIG. 1 were used as organic particles prepared by suspension polymerization using the same monomer as the organic particles of Example 1, in the preparation of the slurry for a heat-resistant adhesive layer. However, a separator was manufactured in the same manner as in Example 1, except that an acryl-based latex having D50 of 5 um and a glass transition temperature (Tg) of 65°C was coated at the content listed in Table 1. The results are listed in Table 1.
The results of evaluating the physical properties of the separators manufactured in the examples and the comparative examples were summarized and are shown in Table 1.

[Table 1]

| | Heat-resistant adhesive layer | | | | | | Electrode adhesive strength (gf/15 mm) | Amount of change in air permeability ∆G (sec/100 cc) | Anti-blocking properties (OK/NG) |
|---|---|---|---|---|---|---|---|---|---|
| | D50 (run) | Tg (°C) | Average particle diameter of organic particles/ average particle diameter of inorganic particles | Content of organic particles (wt%) | Content of organic binder (wt%) | Content of inorganic particles (wt%) | | | |
| Example 1 | 550 | 65 | 0.92 | 35 | 5 | 60 | 2.1 | 78 | OK |
| Example 2 | 400 | 65 | 0.67 | 40 | 5 | 55 | 2.0 | 85 | OK |
| Example 3 | 1500 | 65 | 1.5 | 35 | 5 | 60 | 1.7 | 90 | OK |
| Example 4 | 1000 | 62 | 1.33 | 35 | 5 | 60 | 1.8 | 89 | OK |
| Example 5 | 550 | 65 | 0.95 | 40 | - | 60 | 2.0 | 82 | OK |
| Example 6 | 1500 | 65 | 2.5 | 35 | 5 | 60 | 1.7 | 100 | NG |
| Comparative Example 1 | 550 | 65 | - | 35 | 5 | 60 | Immeasurable | 128 | OK |
| Comparative Example 2 | 550 | 65 | 0.92 | 35 | 5 | 60 | Immeasurable | 77 | OK |
| Comparative Example 3 | 200 | 65 | 0.33 | 45 | 5 | 50 | Immeasurable | 98 | OK |
| Comparative Example 4 | 2000 | 65 | 3.33 | 35 | 5 | 60 | 1.9 | 130 | NG |
| Comparative Example 5 | 3000 | 65 | 8.33 | 35 | 5 | 60 | 2.0 | 145 | NG |

Referring to the results of Table 1 and the drawings, a heat-resistant adhesive layer was formed with organic particles having a secondary particle shape including a convex protrusion part and a valley part interposed between the protrusion parts, as shown in FIG. 3, and it was confirmed that the heat-resistant adhesive layer was formed well on the porous substrate in a range satisfying that an average particle diameter of the organic particles was 0.1 to 1.5 um, 50 wt% or more of the organic particles were used in the binder component, and a ratio of the average particle diameter (D50) of the organic particles to the average particle diameter (D50) of the inorganic particles was 0.5 to 1.5. In addition, it was confirmed that the physical properties of an electrode adhesive strength of 1.5 gf/15 mm to 4.0 gf/15 mm, an amount of change in air permeability of 100 sec/100 cc or less, and no blocking occurrence were satisfied at the same time. Example 6 showed better adhesion than the comparative examples.

However, Comparative Example 1, which used the soluble acryl-based polymer, had blocked pores on the surface as shown in FIG. 4, resulting in poor air permeability, and also had very low electrode adhesive strength.

Referring to FIG. 5, in Comparative Example 2, as a result of using spherical organic binder particles without protrusion parts and valley parts and having a smaller circumference based on the same diameter than the organic particles, the electrode adhesive strength was poor as compared with Example 1 based on the same content.

In Comparative Example 3, as a result of having an excessively small average particle diameter of the organic binder particles as compared with the average particle diameter of the inorganic particles, the organic binder particles were buried between surface roughnesses or between the inorganic particles to deteriorate adhesive strength, as shown in FIG. 6.

In Comparative Examples 4 and 5 using the organic particles which were the same as those of Example 1 but had an average particle diameter of 2 um and 5 um, adhesive strength was exhibited, but an amount of change in air permeability was large and blocking occurred. In addition, powder falling occurred after manufacturing the separator.

The separator of the present disclosure may have excellent electrode adhesion, anti-blocking properties, or air permeability even at a small thickness.

The separator of an exemplary embodiment may have an electrode adhesive strength of 1.5 gf/15 mm or more, 2.0 gf/15 mm or more, 2.3 gf/15 mm or more, 2.5 gf/15 mm, 3.0 gf/15 mm or more, or 1.5 gf/15 mm to 4.0 gf/15 mm, the electrode adhesive strength being measured by laminating the separator on a carbon sheet having a thickness of 200 um so that the adhesive layer of the separator faces the carbon sheet, adhering the separator by compression at 20 MPa at 80°C for 30 seconds with a heat press, and peeling off the separator at 180° using UTM equipment in accordance with ASTM D903. According to the exemplary embodiment, sufficient electrode adhesion may be secured even when organic particles having a shape of secondary particles in which the surface of primary particles of a polymer having a high glass transition temperature is melted and aggregated are included in a relatively small amount.

The separator of an exemplary embodiment may secure excellent electrode adhesion even at a small thickness and also may have excellent anti-blocking properties. For example, two separators in which the porous substrate and the heat-resistant adhesive layer are laminated are disposed by lamination so that the adhesive layers face each other, and then compressed at a pressure of 7.5 MPa at a temperature of 60°C for 1 hour. Next, when the adhered part is peeled off and whether the adhesive layer is partially or completely peeled off to cause blocking between separator surfaces is confirmed by SEM, the separator may have excellent blocking prevention performance without causing blocking in which the adhesive layers are partially released from their separators.

The separator according to an exemplary embodiment may have excellent air permeability even with its multilayer structure in which the heat-resistant adhesive layer is disposed on the porous substrate, and an amount of change in air permeability represented by the following equation may be 100 sec/100 cc or less, 95 sec/100 cc or less, or 90 sec/100 cc or less:

$$\triangle G = G_1 - G_2$$

wherein $G_1$ is a Gurley permeability of a separator in which a heat-resistant adhesive layer is laminated on both surfaces of a porous substrate, and $G_2$ is a Gurley permeability of the porous substrate itself. The Gurley permeability is measured using a densometer available from Toyoseiki in accordance with the standard of ASTM D726, and its unit is sec/100 cc. In addition, even the separator in which the heat-resistant adhesive layer islaminated on one surface of the porous substrate may satisfy the amount of change in air permeability.

In the separator of an exemplary embodiment, two or more of electrode adhesion, anti-blocking properties, and air permeability may be excellent, and more preferably, all of electrode adhesion, anti-blocking properties, and air permeability may be excellent.

In the separator of a specific exemplary embodiment, two or more of electrode adhesion, anti-blocking properties, and air permeability may be excellent, and in the separator of a more specific exemplary embodiment, all of electrode adhesion, anti-blocking properties, and air permeability may be excellent.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

## Claims

1.   A separator comprising: a porous substrate; and a heat-resistant adhesive layer disposed on at least one surface of the porous substrate,
   wherein the heat-resistant adhesive layer includes inorganic particles; and a binder component including organic particles having a plurality of protrusion parts and a plurality of valley parts, and an average particle diameter (D50) of the organic particles is 0.1 to 1.5 um.

2.   The separator of claim 1, wherein the heat-resistant adhesive layer includes 50 wt% or more of the organic particles based on the total weight of the binder component.

3.   The separator of claim 1 or 2, wherein the heat-resistant adhesive layer further includes an organic binder as the binder component.

4.   The separator of claim 3, wherein the organic binder includes any one or two or more selected from the group consisting of acryl-based polymers, silane-based compounds, styrene butadiene rubber, carboxymethylcellulose, polyvinylidene fluoride, polyvinylpyrrolidone, and polyvinyl acetate.

5.   The separator of claim 3 or 4, wherein the heat-resistant adhesive layer includes 30 to 85 wt% of the inorganic particles, 10 to 60 wt% of the organic particles, and 1 to 15 wt% of the organic binder, based on the total weight of the heat-resistant adhesive layer.

6.   The separator of any one of the preceding claims, wherein a ratio of an average particle diameter (D50) of the organic particles to an average particle diameter (D50) of the inorganic particles is 0.5 to 2.5, preferably 0.5 to 1.5.

7.   The separator of any one of the preceding claims, wherein a particle size distribution of the organic particles, D10/D90, is 0.3 to 0.9.

8.   The separator of any one of the preceding claims, wherein the organic particles have a glass transition temperature (Tg) of 50 to 90°C.

9.   The separator of any one of the preceding claims, wherein the heat-resistant adhesive layer has a thickness of more than 0 um and 5 um or less.

10.   The separator of any one of the preceding claims, wherein the organic particles are at least one of: secondary particles in which primary particles are aggregated with each other by surface melting to form a plurality of protrusion parts and a plurality of valley parts; or primary particles having a plurality of protrusion parts and a plurality of valley parts on a surface of the primary particles.

11.   The separator of any one of the preceding claims, wherein the separator has an electrode adhesive strength of 1.5 gf/15 mm to 4.0 gf/15 mm, the electrode adhesive strength being measured by laminating the separator on a carbon sheet (TOYO Tanso Korea, PF-20HP) having a thickness of 200 um so that the heat-resistant adhesive layer of the separator faces the carbon sheet, adhering the separator by compression at 20 MPa at 80°C for 30 seconds with a heat press, and peeling off the separator at 180° using universal testing machine (UTM) equipment available from INSTRON in accordance with ASTM D903.

12.   The separator of any one of the preceding claims, wherein the separator has an amount of change in air permeability $\Delta G$ of 100 sec/100 cc or less as measured by the following equation:

$$\triangle G = G_1 - G_2$$

wherein $G_1$ is a Gurley permeability (sec/100 cc) of a separator in which a heat-resistant adhesive layer is laminated on both surfaces of a porous substrate, and $G_2$ is a Gurley permeability of the porous substrate itself, wherein the Gurley permeability is measured according to the standard of ASTM D726, using a densometer available from Toyoseiki.

13. The separator of any one of the preceding claims, wherein when two sheets of separators are disposed so that the adhesive layers face each other, compressed at a pressure of 7.5 MPa at a temperature of 60°C for 1 hour, and peeled off at 180° in accordance with ASTM D903, the adhesive layers are separated as they are without a phenomenon in which the adhesive layers are adhered to each other and partially or completely peeled off, resulting in no blocking occurrence.

14. An electrochemical device comprising the separator of any one of claims 1 to 13.

15. The electrochemical device of claim 14, which is a lithium secondary battery comprising said separator between a positive electrode and a negative electrode.

FIG. 1

FIG. 2

FIG. 3

SKI-AL-LAB 5.0kV 14.7mm x20.0k 1/12/2022          2.00um

FIG. 4

SKI-AL-LAB 5.0kV 13.3mm x20.0k 11/16/2016          2.00um

FIG. 5

FIG. 6

Europäisches
Patentamt

European
Patent Office

Office européen
des brevets

**EUROPEAN SEARCH REPORT**

Application Number

EP 24 16 4560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0070098 A (W SCOPE KOREA CO LTD [KR]; W SCOPE [KR]) 30 May 2022 (2022-05-30) * abstract * * paragraphs [0051] - [0052] * * paragraphs [0011] - [0022] * * claims 1-10 * | 1-15 | INV. H01M50/446 H01M50/451 H01M50/46 |
| X | US 2020/127264 A1 (KIM GAIN [KR] ET AL) 23 April 2020 (2020-04-23) * abstract * * paragraphs [0035], [0061] - [0063], [0123] * * figures 2-5 * * claims 1-20 * | 1-15 | |
| A | EP 3 761 399 A1 (SAMSUNG SDI CO LTD [KR]) 6 January 2021 (2021-01-06) * abstract * * paragraphs [0035] - [0036] * * claims 1-15 * | 1-15 | TECHNICAL FIELDS SEARCHED (IPC) H01M |

The present search report has been drawn up for all claims

| Place of search | Date of completion of the search | Examiner |
|---|---|---|
| Munich | 8 August 2024 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4560

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | Publication date | Patent family member(s) | | Publication date |
|---|---|---|---|---|
| KR 20220070098 A | 30-05-2022 | NONE | | |
| US 2020127264 A1 | 23-04-2020 | KR | 20190004158 A | 11-01-2019 |
| | | US | 2020127264 A1 | 23-04-2020 |
| | | WO | 2019009564 A1 | 10-01-2019 |
| EP 3761399 A1 | 06-01-2021 | CN | 111954943 A | 17-11-2020 |
| | | EP | 3761399 A1 | 06-01-2021 |
| | | KR | 20190102572 A | 04-09-2019 |
| | | US | 2021005858 A1 | 07-01-2021 |
| | | WO | 2019164130 A1 | 29-08-2019 |

EPO FORM P0459

For more details about this annex : see Official Journal of the European Patent Office, No. 12/82

**EP 4 439 844 A1**

**Patent documents cited in the description**

- JP 4414165 B